# EUROPEAN PATENT SPECIFICATION

(11) **EP 1 686 097 B1**
(45) Date of publication and mention of the grant of the patent: **29.09.2010**
(21) Application number: 06405024.8
(22) Date of filing: 23.01.2006
(51) Int. Cl.: C02F 1/68, C11D 1/72, C11D 1/722

(54) **Method for controlling the build-up of layer, slime or film formation of microorganisms in industrial water systems**
Verfahren zum Steuern der Schicht-, Schleim- oder Filmbildung von Mikroorganismen in industriellen Wassersystemen
Méthode pour commander l'habillage de la formation de couche, de glaires ou de film des micro-organismes dans les systèmes industriels de l'eau

(30) Priority: 26.01.2005 EP 05405039
(43) Date of publication of application: 02.08.2006
(73) Proprietor: Dr. W. Kolb AG, 8908 Hedingen (CH)
(72) Inventor: Martinelli, Daniel, 8001 Zürich (CH); Nägeli ivo, 6300 Zug (CH); Cadalbert, Benedetg, 8910 Affoltern am Albis (CH)
(74) Representative: Bremi, Tobias Hans

(56) References cited:
- US-A1- 2004 167 049
- M. HUMPHRIES ET AL.: "The use of non-ionic ethoxylated and propoxylated surfactants to prevent the adhesion of bacteria to solid surfaces" FEMS MICROBIOLOGY LETTERS, vol. 42, 1987, pages 91-101, XP002332074

## Description

### TECHNICAL FIELD

The present invention relates generally to controlling the build-up of detrimental layer, slime or film formation of microorganisms in various types of circulating aqueous systems. More specifically, it concerns methods and compositions for controlling the build-up of layer, slime or film formation of microorganisms in industrial process waters and, in particular, in pulp and paper water processing systems.

### BACKGROUND OF THE INVENTION

Biofilms are ubiquitous in industrial water systems. Biocontrol, the mediation of microbial growth in industrial water systems is becoming more of a challenge as water consumption is reduced, and correspondingly nutrients are enriched and chemical as well as physical parameters are ideal for microbial growth. This problem is particularly pronounced in paper production in paper mills, where within the last 30 years the average consumption of water has been reduced approximately by a factor of five, with some mills even having a 100% closed waterloop today.

One well known approach to control microbial growth in such systems is the use of biocides to reduce the number of free living organisms. These treatments are however problematic in the sense that biocidal compositions are environmentally critical. Biofilms, i.e. sessile microorganisms living on surfaces, in addition have shown the ability to withstand such biocidal treatments and are becoming a substantial threat to the runnability of these industrial applications.

Biocides are not the only solution for these kinds of problems.

Another approach to the reduction of biologically induced deposits is the additional supply with surface active agents able mobilize the microorganisms and thus to delay and/or reduce the formation of biofilms.

Surface active compounds are already used in industrial applications to control the formation of microbial induced deposits. These compounds are generally built on the basis of alcohols, fatty acids, alkylamides, terpenes or biphenyls. There are several documents like US 5,603,941, WO 03/031347, US 6,395,189, GB2393907, just to name a few, on the use of such kinds of active compounds in industrial applications to reduce biofilm formation. Most of these documents combine the use of a known biocide with a biodispersant in order to enhance the efficiency of the biocides thus using the addition of a surfactant to increase the efficiency of the biocides.

Attention is drawn to the document by Martyn Humphries et al. entitled "The use of non-ionic ethoxylated and propoxylated surfactants to prevent the adhesion of bacteria to solid surfaces" (FEMS Microbiology Letters 42 (1987) 91-101. In this document only preventive use of surfactants is described, i.e. in this document containers are rinsed with surfactants and thereby so to speak impregnated with such surfactants. Subsequently water is introduced into these containers and it is measured whether microbial induced deposits are generated. The surfactants described in this document therefore are only looked at in respect of how the adhesion of microbial systems on the walls of a container can be prevented. Build-up of microbial systems after a certain deposit has already taken place is not investigated in this document. There is no mention of an aqueous circulating systems in the container.

### SUMMARY OF THE INVENTION

An objective of the present invention is therefore to provide an improved method as well as a formulation for influencing biologically induced deposits.

The present invention more specifically pertains to a method for controlling and preventing the build-up of layer, slime or film formation of microorganisms in various types of aqueous systems, in particular in circulating water systems.

The object of the present invention is therefore a method according to claim 1, as well as a formulation according to claim 16.

One key feature of the invention is therefore the fact that surprisingly the addition of effective amounts of a composition comprising at least one ethoxylated non-ionic surfactant, wherein the ethoxylated non-ionic surfactant comprises a substantially saturated linear, unsubstituted carbohydrate tail portion with at least 16 carbon atoms, which by means of a linker element O is connected to a polyethoxylate chain, comprising at least 5 ethoxylate (EO) units, optionally followed by a propylene oxy (PO) and/or a butylene oxy (BO) chain, leads to an enhanced biofilm control without being toxic in itself, which means that the method provides a possibility for controlling biofilms without the detrimental side-effects associated with biocidal compositions. While biocidal compositions are increasingly difficult for environmental reasons, the present invention therefore provides a valuable alternative.

It has to be pointed out that the proposed method is distinguished from the above-mentioned document by Humphries at least in that the proposed composition is not used as an impregnation prior to keeping water in a container, but it is used as an additive for water kept or preferably circulated in a container for continued biofilm inhibition and not only for prevention prior to keeping water in the container.

A general formula can thus be given as follows:

A-L{(EO)ₓ(POBO)_{y}}ₙ

wherein
- A: is a substantially saturated linear, unsubstituted carbohydrate (alkyl) group;
- L: is a linker element O;
- EO: is an ethoxy group (-(CH₂)₂-O-);
- PO/BO: is a propoxy (-CH₂-CH(CH₃)-O- or -CH(CH₃)-CH₂-O-) and/or butoxy group (- CH(CH₂CH₃)-CH₂-O- or -CH₂-CH(CH₂CH₃)-O- or -CH(CH₃)-CH(CH₃)-O-) (i.e. possibly variable within the chain);
- x: ≥ 5;
- y: ≥ 0;
- n: is 1.

The value of x of course stands for an average value since in the ethoxylation step usually a mixture is obtained also comprising minor amounts of somewhat larger and smaller ethoxy-chains.

This alternative basically relies on the mechanism that the proposed molecular structures do not kill organisms which contribute to the build-up of layer, slime or film formation in aqueous systems, but the proposed molecular structures basically prevent the build-up of layer structures sufficiently thick that detachment of flocks or the like of a size, which negatively influences the processes, in which the aqueous system is incorporated (for example papermaking process), can take place.

The particularly powerful system is **characterised in that** the linker element is -O-. In case of O this leads to the general formula A-O-(EO)ₓ-(PO/BO)_{y} with x ≥ 5 and y ≥ 0.

In the context of the linker element it has to be pointed out that slight propoxylation of the carbohydrate element prior to the ethoxylation might also lead to functionally equivalent molecular structures and these shall also be encompassed by the present invention as claimed. Correspondingly, the linker element may also be formulated more generally as O(PO)_{z} with z = 0-2, thus leading to structures of the general type A-O-(PO)_{z}(EO)ₓ(PO/BO)_{y}. In case of such prior propoxylation of the carbohydrate tail A, the length of the carbohydrate tail may also be slightly shorter (e.g. roughly by 2 C-units per PO/BO) due to the fact that the PO/BO element adds to the hydrophobicity of the tail portion.

Furthermore it should be mentioned that, if some propoxylation and/or butoxylation is present, at the terminal end also some further terminal propoxylation is possible in some cases without thereby substantially amending the functionality of the molecular structures. This can be formulated generally as follows: A-O-(PO)_{z}(EO)ₓ(PO/BO)_{y}(EO)ₜ with x ≥ 5, y ≥ 0, z = 0-2 and t = 0-1 or event = 0-2.

Pronounced effects in prevention of the build up of layer structures are observed if the carbohydrate tail portion comprises at least 16 carbon atoms, so for example systems based on C 16 up to C24 such as but not limited to: cetylalcohol (C16), heptadecanol (C17), octadecanol (C18, such as stearylalcohol, oleylalcohol, erucylalcohol, ricinolalcohol, linoleylalcohol, linolenylalcohol and the like), nonadecanol (C19), and even eicosanol (C20, such as arachidylalcohol, gadoleylalcohol and the like), heneicosanol, docosanol, and mixtures thereof.

Preferred systems are of those, in which the linker element is -O-, and in which the carbohydrate tail portion comprises between 16 and 24, preferentially between 16 and 22, and even more preferentially between 16 and 20 carbon atoms. Since typically the fatty alcohols as derived from natural processes are mixtures of hydrocarbon chains with different length in a certain range and with slightly variable degree of saturation and branching, if ranges are given in the characterisation of the hydrocarbon tail portion as for example 16-18 (also designated as 16/18 or C-16/18), this substantially includes a mixture of systems with 16, 17, and 18 carbon atoms in the tail portion. Preferentially the carbohydrate tail portion is substantially linear and substantially saturated and it is a 16/18 system.

On the other hand, preferentially the polyethoxylate chain comprises at least 7 ethoxylate units, and preferentially no more than 20 ethoxylate units. The optional propylene oxy and/or a butylene oxy chain comprises between 1 and 10 propylene oxy and/or butylene oxy units. Preferred are propylene oxy systems.

More specifically, the at least one ethoxylated non-ionic surfactant is outstandingly efficient if it is given as an unsubstituted and substantially linear mixture of C16/18 fatty alcohol with an average ethoxylation of 7, 8, 9, 10, 11, 12, 13, 14, 15, 16, 17, 18, 19 or 20 ethoxylate units. Such a system may have an average propoxylation of 0 - 10 propylene oxy units.

For these systems to be efficient in preventing biofilm buildup to layer thicknesses which become detrimental, it is advised to add the at least one ethoxylated non-ionic surfactant to the circulating aqueous system in an amount of 1-100 ppm, or more specifically of 2-15 ppm, preferentially of 5-10ppm. The at least one ethoxylated non-ionic surfactant can be added continuously or batch-wise to the circulating aqueous system. Preferentially the circulating water system is a pulp and paper water processing system.

In order to avoid excessive and overly addition of the agent, the supply with surfactant can be controlled as a function of the actual state of layer, slime or film formation of microorganisms in the system. This state of layer, slime or film formation may for example be measured online by means of optical or thermal measurements, the latter e.g. consisting in the measurement of the thermal isolating effect the biofilm has on an interface between the water system and one of the bordering surfaces.

As already pointed out above, the at least one ethoxylated non-ionic surfactant is preferentially added to the circulating aqueous system without concomitant addition of biocidally active components. It is however also possible to combine it with in particular specific and targeted biocidally active components if such need arises. It is also possible to combine the non-ionic surfactant with additives which increase storability (stabilizers), means to prevent foam formation and the like.

As already pointed out, effective amounts of a composition are added to an operative circulating aqueous system, and it can be shown that the good biofilm formation prevention is possible if the linker element is -0-, and if the ethoxylated non-ionic surfactant comprises a substantially saturated linear (or branched) unsubstituted carbohydrate tail portion with at least 16 carbon atoms, preferably with a distribution of 16/18 carbon atoms. This in particular if the polyethoxylate chain comprises on average at least 10, preferably on average at least 15 ethoxylate units.

Generally one can say that preferably the chain should not comprise more than 100 ethoxylate units, preferably less than 50 ethoxylate units.

A highly efficient system is given if the polyethoxylate chain comprises on average 18 ethoxylate units, and if, as preferred furthermore, such a polyethoxylate chain is followed by a propylene oxy chain comprising on average at least 3 propylene oxy units, preferably on average at least 5 propylene oxy units or, as most preferred, if the propylene oxy chain comprises on average 9 propylene oxy units.

Generally one can say that preferably the propylene oxy chain should not comprise more than 50 propylene oxy units, preferably less than 30 propylene oxy units.

Specifically, a system with 16/18 carbon atoms, 18 ethoxylate units followed by 9 propylene at oxy units (abbreviated as C-16/18-18EO-9PO, see experimental data given below). As a matter of fact, in contrast to the well known technical prejudice as e.g. stated in Humphries in the discussions starting on page 99, it can be shown that surprisingly the number of ethoxylate units as attached to the carbohydrate chain does indeed influence the efficiency and in a very specific way and so does the presence of an additional propylene oxy chain.

In order to increase the solubility of such a composition in particular for providing a prepared solution to be introduced into the circulating system, is advantageous if the composition comprises at least two different such ethoxylated non-ionic surfactants, wherein preferably one of them comprises no propylene oxy chain and wherein one of them serves an aid for dissolution. Such a composition, which as such but also in aqueous solution of approximately 20% total surfactant in water is stable, i.e. at room temperature and above is stable and below room temperature only shows clouding close to 0°C (if at all), is for example possible if a first ethoxylated non-ionic surfactant based on a substantially saturated linear unsubstituted carbohydrate tail portion with a distribution of 16/18 carbon atoms, with a polyethoxylate chain comprising on average 18 ethoxylate units, followed by a propylene oxy chain comprising on average 9 propylene oxy units (C-16/18-18EO-9PO) and a second ethoxylated non-ionic surfactant based on a substantially saturated linear unsubstituted carbohydrate tail portion with a distribution of 16/18 carbon atoms, with a polyethoxylate chain comprising on average 20 ethoxylate units, not followed by any propylene oxy chain (C-16/19-20EO).

Furthermore the present invention relates to a formulation to be added to various types of in particular circulating aqueous systems for controlling the build-up of layer, slime or film formation of microorganisms, in particular for use in a method as described above. The formulation for biofilm control comprises at least one ethoxylated non-ionic surfactant which is a C16/18 fatty alcohol with an average ethoxylation of 7, 8, 9, 10, 11, 12, 13, 14, 15, 16, 17, 18, 19 or 20 ethoxylate (EO) units and with an average propoxylation of 0 - 10 propylene oxy (PO) units, optionally supplemented by additives like stabilizers, either in solid or liquid form or as a concentrated aqueous solution, and wherein preferentially the formulation is free from biocide. Particularly efficient systems are fatty alcohols with C-16/18-7EO, C-16/18-8EO, C-16/18-9EO, C-16/18-10EO, C-16/18-11EO, C-16/18-12EO, C-16/18-13EO, C-16/18-14EO, C-16/18-15EO and C-16/18-20EO, as well as the corresponding systems with additional 4PO, 6PO and 9PO. These systems may either be provided as solid formulations or they may be provided for ease of use as concentrated solutions, wherein in particular in the latter case stabilizers, anti-coagulants, anti-oxidizers and the like may be added to the formulation.

Further embodiments of the present invention, i.e. of the method as well as of the formulation are outlined in the dependent claims.

### SHORT DESCRIPTION OF THE FIGURES

In the accompanying drawings illustrations of the invention are shown in which:

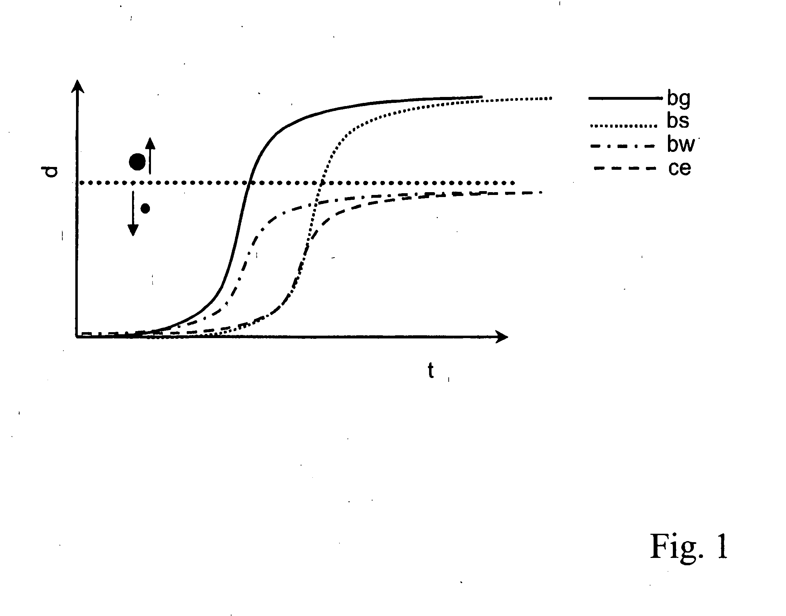

- Fig. 1: shows the influence of a biostabilizer (bs), a biowettant (bw) and their combined effect (ce) on the growth kinetics of a biofilm (thickness designated with d) as a function of time t, wherein an uninfluenced biofilm growth is also indicated (bg), and wherein the threshold value for detrimental detachment of film particles is given as a dotted horizontal line;

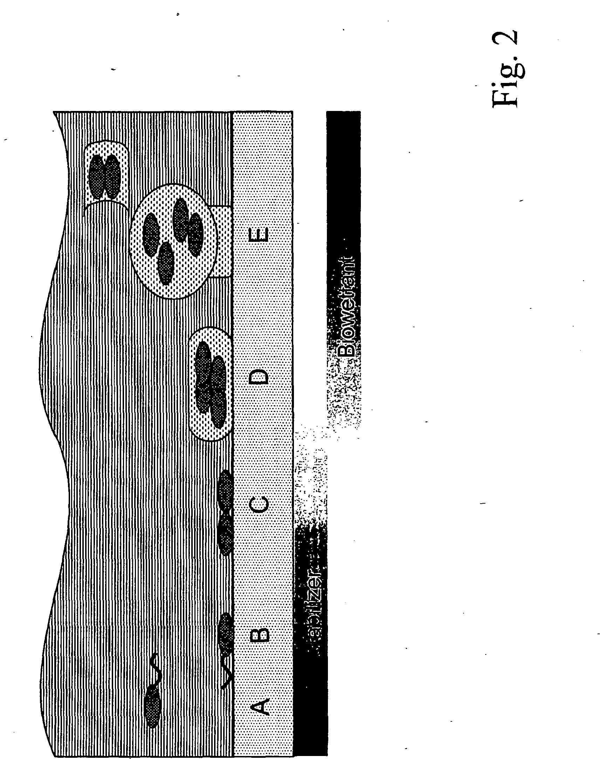

- Fig. 2: shows a model of biofilm formation;

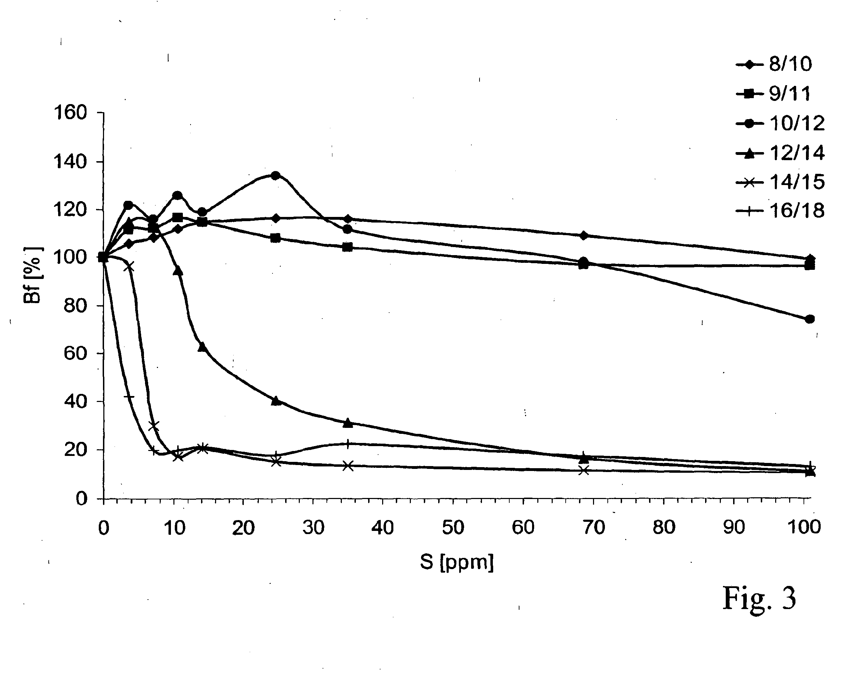

- Fig. 3:: shows the influence of alkyl-side chain length on the formation of biofilm (Bf) at constant EO content of 7-8 mol; biofilm formation is measured and indicated relative as percentage of the reference (100% = maximum formation in the reference) which is not treated with a biodispersant and as a function of the concentration of biodispersant S;

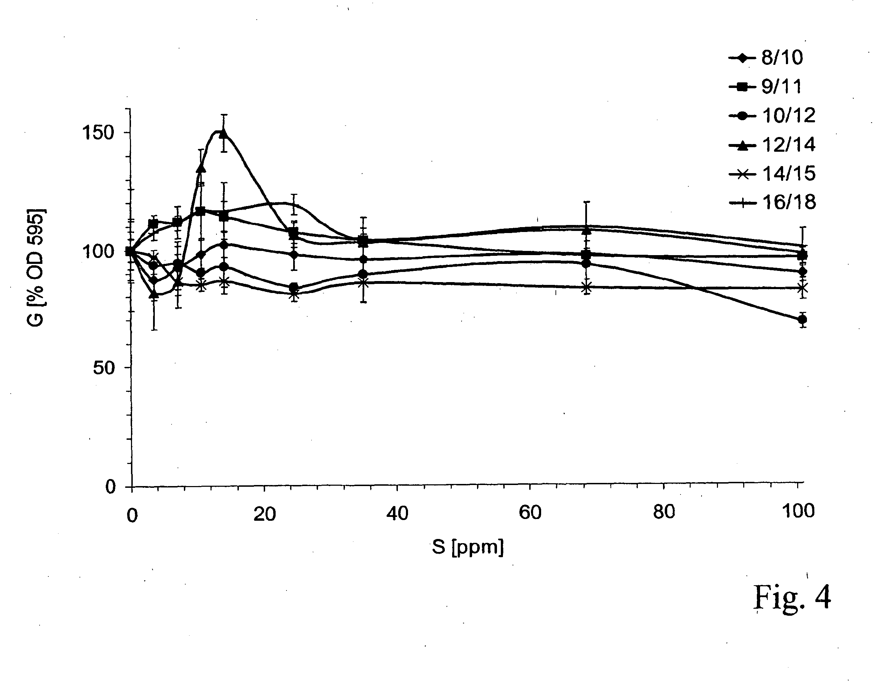

- Fig. 4: shows the influence of alkyl-side chain length on the growth G at constant EO content of 7-8 mol; growth is indicated relative as percentage of the reference (100% = maximum formation in the reference) which is not treated with a biodispersant and is given as a function of the concentration of biodispersant S; results are mean values of 8 replicates, error bars indicate the standard deviation; the values indicate the total presence in solution;

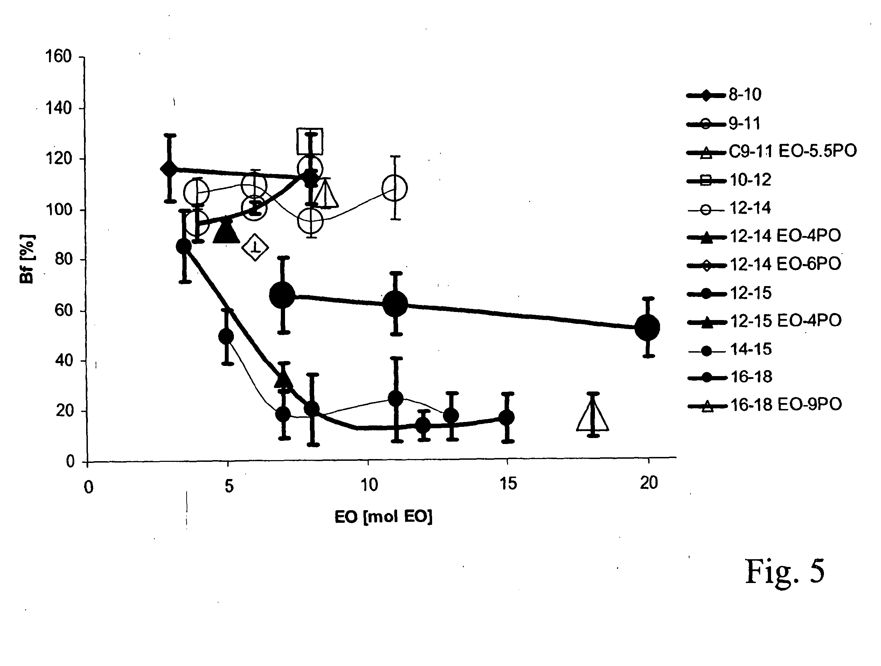

- Fig. 5: shows the influence of alkyl-side chain length at various degrees of ethoxylation EO (100% = maximum formation in the reference) when the biodispersant is added at the beginning of the experiment (biostabilizer experiment); results are mean values of 8 replicates, error bars indicate the standard deviation;

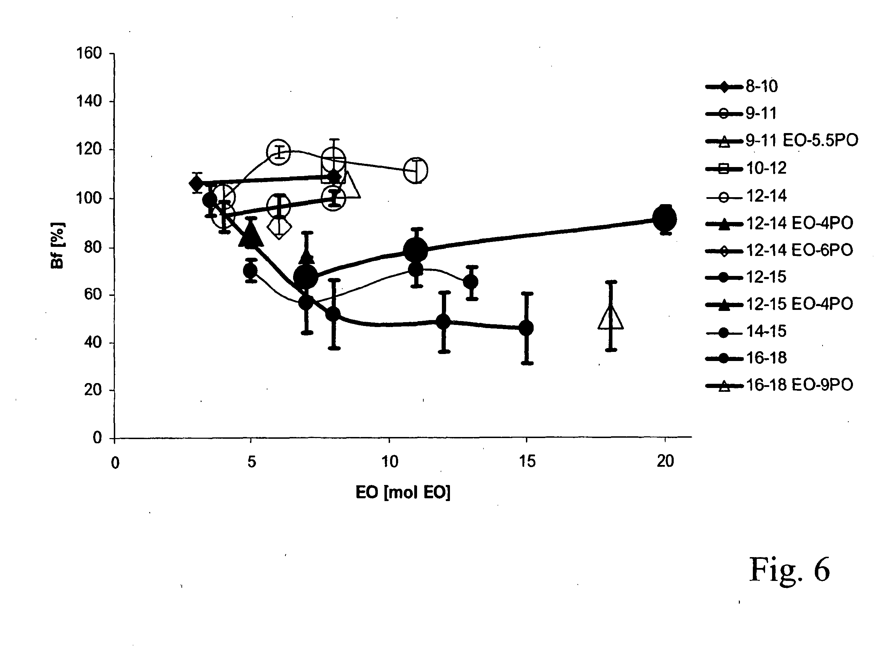

- Fig. 6: shows the influence of alkyl-side chain length at various degrees of ethoxylation EO (100% = maximum formation in the reference) when the biodispersant is added after 24 h of the experiment (biowettant experiment); 100% = maximum formation in the reference; results are mean values of 8 replicates, error bars indicate the standard deviation;

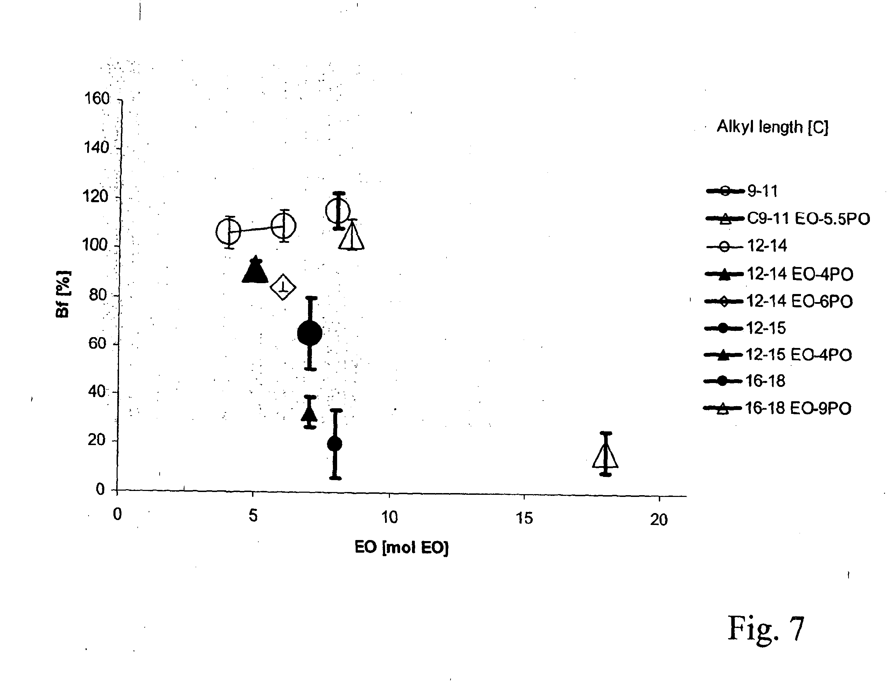

- Fig. 7: shows the influence of propoxylation of biodispersants at various lengths and various degree of ethoxylation EO (100% = maximum formation in the reference) when the biodispersant is added at the beginning of the experiment (biostabilizer experiment); 100% = maximum formation in the reference; results are mean values of 8 replicates, error bars indicate the standard deviation;

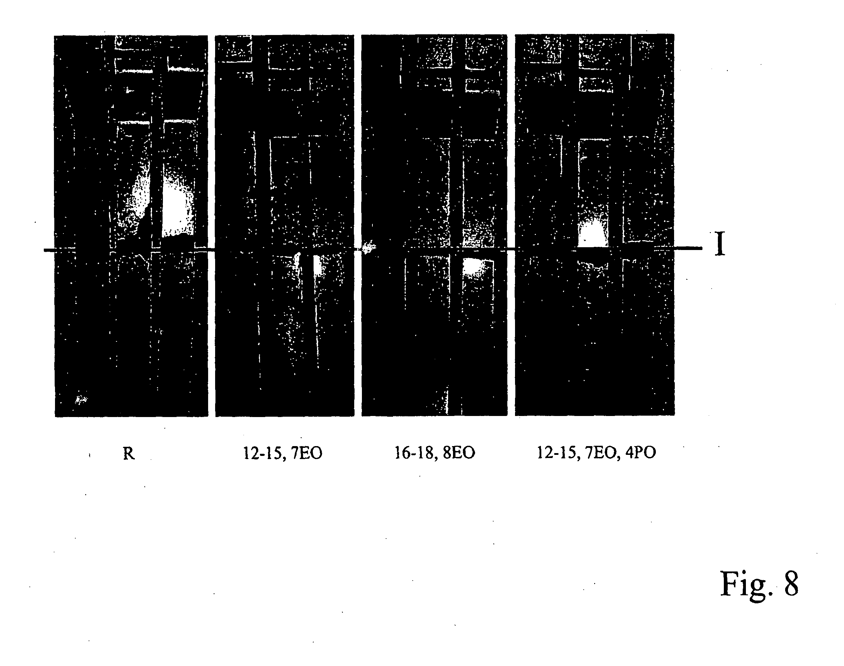

- Fig. 8: shows the influence of biodispersants tested in the PMS on biofilm formation; R: reference ; C-12/15 with 7EO; C-16/18 with 8EO; C-12/15 with 7EO 4 PO;

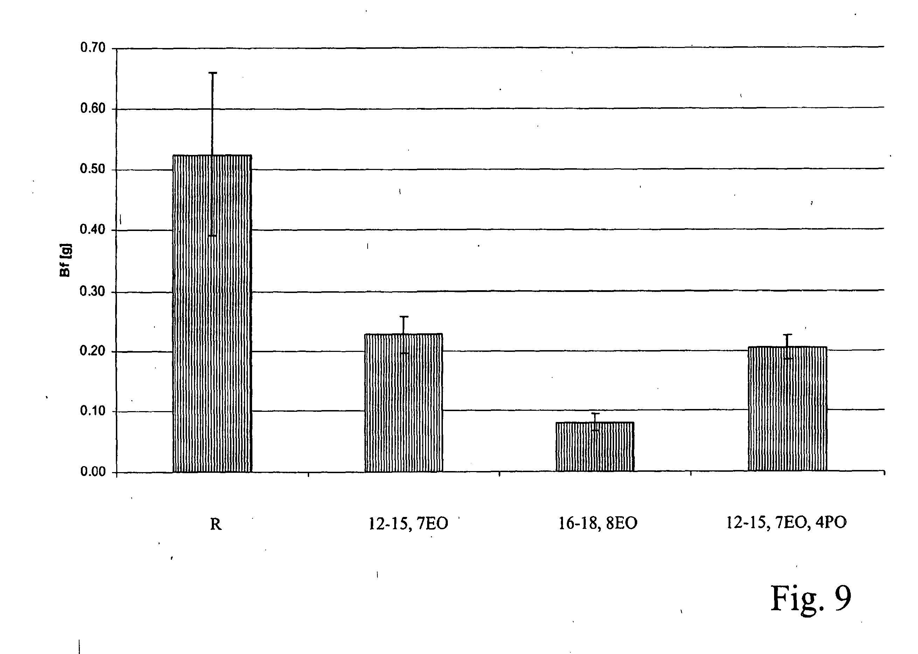

- Fig. 9: shows the evaluation of the results from the PMS; R: reference ; C-12/15 with 7EO; C/16-18 with 8EO; C/12-15 with 7EO 4 PO; error bars are standard deviations of triplicates; and

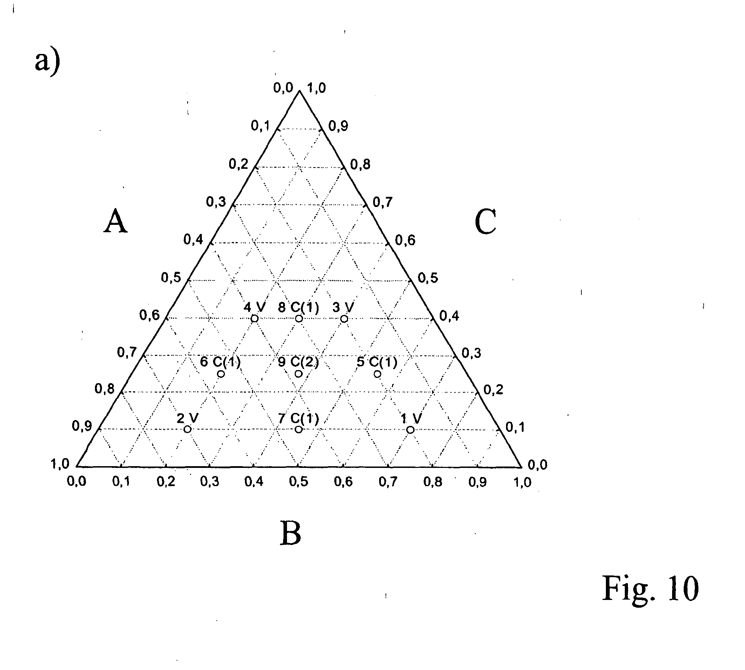

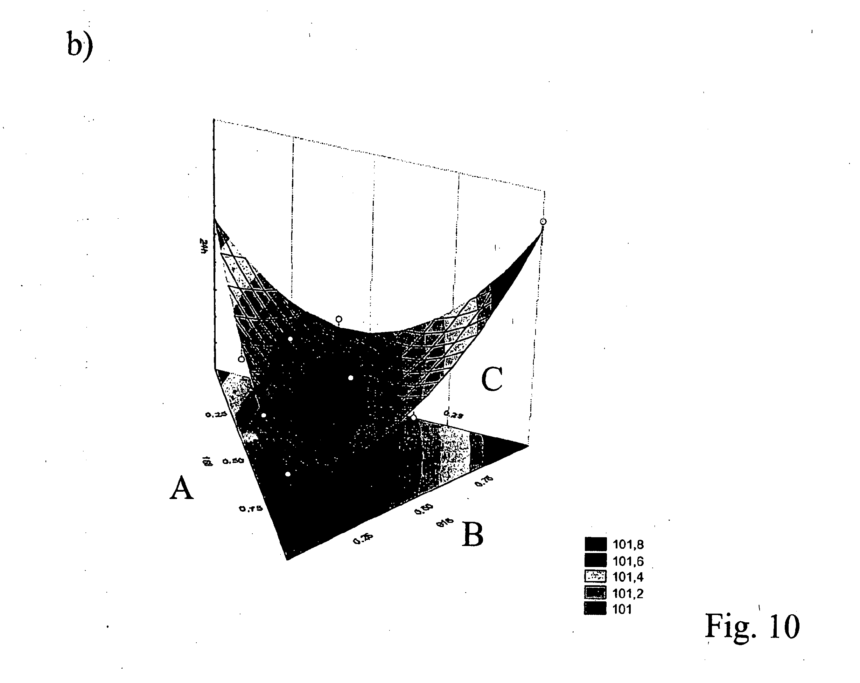

- Fig. 10 a) and b): show graphical visualisations of the experimental data as outlined in tables 1 and 2, wherein the degree of stability is determined by visual inspection.

### DETAILED DESCRIPTION OF THE PREFERRED EMBODIMENTS

Association with surfaces and the formation of biofilms is the prevailing microbial lifestyle in water carrying system. A biofilm is in general a community of microorganisms attached to a surface and embedded in a matrix consisting of extracellular polymeric substances (EPS). Studies on biofilms agreed on a common model (see further below, e.g. Fig. 2) of biofilm formation divided in several steps including free living (A), initial settlement (A->B), aggregation (C), maturation (D) and detachment (E). For the formation of biofilms bacteria change their physiological activity in response to a variety of environmental signals. The consequences of biofilm formation for medical and industrial applications are manifold. Biofilms may harbor infectious organisms, lead to corrosion or simply impoverish system performance due to the biomass formation and for example in papermaking industry in particular the process of detachment leads to the presence of bio mass flocks in the process water, which leads to detrimental influences on the actual formation of the sheet of paper. The eradication of biofilms is often hard, as they tend to resist biocides and antibiotics and adapt to cleaning strategies. The change in physiological behavior and the formation of EPS may hold the reasons why organisms growing in biofilms are often harder to eradicate than their free living counterparts.

### Biodispersants: biowettants and biostabilizers

Biodispersants are molecules able to influence the formation of a biofilm. To assess the functionality of prospective biodispersants it is possible to classify the biodispersants into the following functional classes having different targets in biofilm formation as schematically shown in Figure 2 in its various phases and thus with different functionality as shown in Figure 1. Figure 1 generally displays the influence of a biostabilizer (bs), a biowettant (bw) and their combined effect (ce) on the growth kinetics of a biofilm. As a reference biofilm growth (bg) without any addition of biostabilizer or biowettant is also displayed. One can see that a biostabilizer (bs) would retard biofilm formation, however finally leading to the same layer thickness of the biofilm as without any addition. A biowettant will reduce the final thickness of a biofilm, while hardly influencing the kinetics of biofilm formation.

The following general definitions are used in this context:
- Biocide: system which actively either kills microbial life in water or prevents its multiplication.
- Biodispersant: system which will either disintegrate/dissolve existing biofilms or prevent/slow up their formation.

Biodispersants themselves can be divided into two sub classes:
- Biostabilizers: are acting on the initial steps of biofilm formation by reducing the probabilty of microorganisms to attach to surfaces and preventing the covering of surfaces.
- Biowettants: are acting on developing or mature biofilms by breaking up the EPS structure and enhancing the detachment of biofilms thus reducing the thickness of existing biofilms.

Biostabilizers can therefore be regarded as 'surface conditioning and cleaning' agents preventing a formation of biologically induced deposits by the reduction of bacterial settlement on surfaces. On the other hand biowettants act similiarly to 'cleaning agents' by breaking up and thus removing existing deposits.

Figure 1 visualises the effect of two different types of biodispersants as well as of their combined effect. Additionally, in figure 1 a threshold value is schematically indicated (horizontal dotted line). In particular in circulating process water as for example in the context of papermaking, the main problem is usually the presence of flocks of bio mass in the water which are generated in the detachment process after a biofilm has reached a certain layer thickness. Therefore a threshold value exists, below which the detachment process does not lead to flocks of bio mass which negatively influence the actual process into which the circulating process water is involved, i.e. only small flocks or even individual cells are detached from the rather thin layers (arrow pointing downwards). The small flocks are schematically indicated in Fig. 1 by a small filled circle.

Above the threshold value the biofilm has reached a thickness which leads to serious detachment of large flocks of a size which is negatively influencing the actual process into which the circulating process water is involved. The large and detrimental flocks are schematically indicated in Fig. 1 by a large filled circle.

### Biofilm model and biodispersants

Studies on biofilms agreed on a common model of biofilm formation divided in several steps including free living (A), initial settlement (A->B), aggregation (C), maturation (D) and detachment (E). For the formation of biofilms bacteria change their physiological activity in response to a variety of environmental signals. Figure 2 illustrates these steps of biofilm formation schematically: The five stages are: A) planctic living; B) attachment; C) aggregation and coverage of surface; D) young biofilm establishing 3-dimensional structure, production of quorum sensing signals (quorum signals: signalling molecules which are released into the environment, allowing bacteria to measure the number/concentration of the molecules within a population thus enabling bacteria to co-ordinate their behaviour); E) mature biofilm with detachment of organisms (flock formation). Biostabilizers have their activity mainly in stage A and B, biowettants are active mainly in stage C,D and E.

Biocides are mainly active in stages A, B, and C, and to a limited extent also in stages D and E. Although the very same species can exist in both forms of living, cells attached to surfaces and embedded in biofilms have as a matter of fact been shown to be more resistant to antimicrobial treatments than free living. One explanation for the increased resistance of bacteria living in biofilms is their change in physiological properties which is associated with the production of quorum sensing signals. In some cases the formation of biofilms is also associated with the formation of biosurfactants and these molecules may reduce or enhance the formation of biofilms.

### Biodispersants mimicking biosurfactants

The finding of surface active agents produced by microorganisms that are able to reduce or inhibit the formation of biofilms may be used as an inspiration for the search of surface active non-ionic surfactants mimicking the structural and functional properties of biosurfactants. Some biosurfactants have the general structure of a surfactant containing two hydrophobic alkyl chains enclosing an hydrophilic part produced by known biofilm formers like e.g. rhamnolipids from *Pseudomonas sp.* or *serrawettins* from *Serratia sp.* Other biosurfactants have the general structure of a shorter hydrophobic part and a comparatively bigger hydrophilic part like viscosin, iturin or surfactin e.g. from Bacillus subtilis an organism commonly found in paper mills.

The presently investigated non-ionic surfactants are designed to be of the general structure of ethoxylated and propoxylated fatty alcohols, fatty acids, fatty amines and sorbitan to mimic the functionality of naturally produced biosurfactants and are tested for their ability to reduce biofilm formation (see Table 1).

**Table 1: List of surfactants tested for their ability to influence the biofilm formation with Pseudomonas putida.**

| Hydrophobic parts | Hydrophlic parts | Hydrophobic parts |
|---|---|---|
| Alcohols from C4-C16 | Ethoxylate from 3 to 20 EO | Propoxylates from 4 to 20 PO |
| Fatty acids C12 and C18 | Sorbitan or ethoxylate from 4 to 12 EO | |
| Fatty amines C14-18 | Ethoxylate from 6 to 15 EO | |

### Screening experiments

In a first approach a screening test was used to evaluate valid candidates as new biomimetic surfactants with a high throughput assay. The screening test is a pure strain *(Pseudomonas putida*) screening assay for the efficiency of biodispersants on biofilm formation. The test is adapted after Mireles et al. (Journal of Bacteriology, 10.2001 Vol.183 No.20 pp. 5848-5854) and Pitts et al. (Journal of Microbiological methods, 2003 Vol.54 No. pp.269-276) and conducted in 96 well plates. By staininig the biofilm with crystal violet and extraction of the crystal violet with ethanol it is possible to indirectly but nevertheless reliably quantify the amount of biofilm formed. Extracted crystal violet was assessed photometrically at 595nm. To ensure that the added biodispersants did not negatively influence the growth of *P. putida* and therefore reduce biofilm formation by a killing effect, the optical density before the staining procedure was assessed (OD at 595 nm). Stable optical density values indicate a stable popolation in the supernatant. The biostabilizer test was conducted by adding surfactants at the beginning of the experiments to prevent biofilm formation. Biowettant tests were conducted by adding surfactant after a biofilm had already formed (24h) and assessed for the capability of the surfactants to reduce already formed biofilms.

### Laboratory scale paper mill simulation (PMS)

In the PMS one simulates the conditions of the white water cycle of a paper mill in parallel assays. One m³ of an artificial white water was produced with standardized (dried) recycled news paper. The white water had a consistency of about 0.1% of fibers, was adjusted for neutral pH and nutrients like starch and Difco standard nutrient broth (Becton Dickinson and Company) was added. This white water was then pumped through vessels of 101 with an exchange rate in the individual vessels of approximately 70% of total vessel volume/day. Each vessel contains three metal strips to assess the formation of biological induced deposits. To ensure the formation of a deposit the white water in the vessel was stirred and the temperature was adjusted to 38°C to mimic standard paper mill conditions. The efficiency of the biodispersant candidates from the screening assay were then tested for their functionality visually (by staining with crystal violet) and by weight using the metal coupons by applying the biodispersants for 14 days at 10ppm.

### Results and discussion

Screening assays: The compounds having the best efficiency on biofilm control were non-ionic surfactants built on the basis of fatty alcohols. We did not achieve a sufficient result with sorbitan or fatty acid ethoxylates.

Figure 3 shows the results form the screening of biodispersants with systems of different alkyl side-chain length at constant ethoxylation (EO content of 7-8 mol). So the systems tested were C-8/10 7-8EO, C-9/10 7-8EO and so on. Biofilm formation is measured as a function of the concentration of the biodispersant (s) in ppm and given as percentage of the reference (100% = maximum formation in the reference) which reference is not treated with a biodispersant at all.

It is clearly visible, that the longer the alkyl side-chain the better the inhibition efficiency of the compound. The C-16/18 compound showed almost 60% reduction in biofilm formation at a concentration already as little as 3ppm. But even at lower concentrations a significant effect can be observed. Maximum efficiency is already reached for a concentration of approximately 7-8 ppm which demonstrates a remarkable activity of this compound C-16/18 7-8EO.

At the same time the same compounds where also tested for their influence on growth in solution, and the results of this are shown in Figure 4. Growth is given relative to the reference (100% = maximum formation in the reference) which is not treated with a biodispersant. Results are mean values of 8 replicates, error bars indicate the standard deviation. The compound inhibiting growth most was a C-14/15 ethoxylate (80% of reference value) while the C-12/14 compound even enhanced growth considerably for certain concentrations. The compound C-16/18 increased the growth to at most 120 % of the reference and therefore it can be shown that the activity of this compound is not due to a biocidal, i.e. a killing effect. As a matter of fact, none of the compounds tested showed LD50 or LC50 values that would classify them as biocidal components.

Figure 5 and Figure 6 show the results of the influence of varying alkyl-length combined with different degrees of ethoxylation (EO). Figure 5 in particular shows the biofilm formation (Bf) as a function of the degree of ethoxylation for different alkyl-side chain lengths (100% = maximum formation in the reference) when the biosidspersant is added at the beginning of the experiment (biostabilizer experiment).

Figure 6 shows the biofilm formation (Bf) when the biosidspersant is added after 24 h of the experiment (biowettant experiment), also as a function of the degree of ethoxylation for different alkyl-side chain lengths. In both cases results are mean values of 8 replicates, error bars indicate the standard deviation.

Again here the compound with C-16/18 shows the best efficiency. Also C-12/15 shows activity, however to a lower extent. It can be seen that at least five EO units should be attached to the C-16/18 hydrocarbon chain, and best results are obtained for ethoxylations of at least 5 or 7 EO units.Figure 7 indicates the influence of propoxylation on these biodispersants at various lengths of the alkyl chain and various degrees of ethoxylation (100% = maximum formation in the reference) when the biosidspersant is added at the beginning of the experiment (biostabilizer experiment). Results are mean values of 8 replicates, error bars indicate the standard deviation. The additional propoxylation for all compounds shows an increase in efficiency in biofilm removal/prevention. The addition of the biodispersants as a biowettant did not reveal any indication of a different behaviour concerning the structure of the molecule. It can be seen however that the efficiency of the compounds follow the same order as seen in the biostabilizer experiments.

In summary it can be seen that not only an increase in alkyl length (C>13 or C>15) improves the efficiency of the compounds but also a higher degree of ethoxylation (EO>4 or EO > 6) and optional propoxylation (PO > 3) is beneficial. From our results we suggest that a non-ionic surfactant of the structure C-16/18 alcohol + n EO + m PO (n at least 5, m = 0-10) will achieve the best efficiency as biostabilizer as well as biowettant.

It can be recognized from Figs 5, 6 and 7 that in particular the system C-16/18 with 18 EO units and 9 PO units (C-16/18-18EO-9PO) is clearly superior for biostabilizer and biowettant purposes concomitantly. This effect of this specific system can, as in the case of other surfactant systems, be provided most conveniently if in addition to this surfactant a further surfactant is added. Such a further surfactant may for example support the first surfactant in inhibiting biofilm formation and/or it may act as a solubility aid such as to make sure that the combination of the surfactant is stable or an aqueous solution of the surfactants can be provided in rather high concentration (20-25%) for addition to the circulating system. Such an additional surfactant can for example be a surfactant with C-16/18 with 20 EO units but no PO units (C-16/18-20EO). Further surfactants or additives are possible in order to stabilize a corresponding formulation and/or in order to mutually support the biostabilizer and biowettant effect of the surfactants. Such a combination of two surfactants makes it possible to provide a formulation which is liquid not only at room temperature but also below up to close 0°C. Ideally, such a formulation does not even show clouding, flocculation, gel formation or separation close to freezing point. Clouding, flocculation, gel formation or separation would make it almost impossible to deliver such a formulation to a circulating aqueous system.

Laboratory scale paper mill simulation: In the PMS the compounds most promising from the screening assays were tested. The influence of biodispersants tested in the PMS on biofilm formation is given in Figure 8. Visual examination of the metal strips used for the assessment of the biofilm formation shows that similar results as in the screening experiments where found with C-16/18 being most successful in reducing/preventing the formation of a biofilm. Also the quantitative results show a clear advantage of the C-16/18 compound with 7 mol EO over the other compounds, as can be seen in Figure 9, which shows a reference (R, no addition of biodispersant), C/12-15 with 7EO, C/16-18 with 8EO, C/12-15 with 7EO 4 PO. Error bars are standard deviations of triplicates.

The results of further experiments are summarised in tables 2 and 3 as well as in figure 10. In a series of different possible combinations of constituents, the stability in a highly concentrated system was first investigated (experiments 1V-4V as well as 5C-9C).

As one can see from figure 10, in which the axis A stands for C16/18-20E, the axis B stands for C16/18-18EO-9PO, 80% in water and the axis C stands for C8/10-8EO, just looking at a concentrated system, in which the only water brought into the system is given by the concentration of component B in water (80%), optimum stability is given in a "valley" going from bottom left to up right in figure 10a) and b). In this optimum stability region, clouding, flocculation, phase separation, gel formation are not taking place over a wide temperature range (as determined by visual inspection).

One possible ideal system just based on stability considerations was correspondingly determined to be the example 10C as given in the tables below.

However, as also the effectiveness in respect of inhibiting biofilm formation has to be taken into account, the optimum compromise could be found in combination 19 as given in the tables below. As a matter of fact, this specific combination is one possible ideal compromise in terms of stability of the formulation, either in the form as given in the tables or in the form of a more diluted aqueous solution (e.g. approximately 20 Vol.-% of a formulation as given in table 1 in water) and in terms of effectiveness in respect of inhibiting biofilm formation.

**Table 2:**

| Expt. | C16/18-14EP | C16/18- 18EO-9PO, 80% in water | C8/10-8EO | C16/18-20EO | C12/14-6EO | C14/15-7EO | C16/18-19EO-7PO | Remarks |
|---|---|---|---|---|---|---|---|---|
| 1 | 3 | 1 | 1 | | | | | |
| 2 | 4 | 2 | 2 | | | | | |
| 3 | 8 | 2 | - | | | | | |
| 4 | 2 | 1 | 2 | | | | | |
| 1 V | 0.20 | 0.70 | 0.10 | | | | | See Figure 9 |
| 2 V | 0.70 | 0.20 | 0.10 | | | | | See Figure 9 |
| 3 V | 0.20 | 0.40 | 0.40 | | | | | See Figure 9 |
| 4 V | 0.40 | 0.20 | 0.40 | | | | | See Figure 9 |
| 5 C(1) | 0.20 | 0.55 | 0.25 | | | | | See Figure 9 |
| 6 C(1) | 0.55 | 0.20 | 0.25 | | | | | See Figure 9 |
| 7 C(1) | 0.45 | 0.45 | 0.10 | | | | | See Figure 9 |
| 8 C(1) | 0.30 | 0.30 | 0.40 | | | | | See Figure 9 |
| 9 C(2) | 0.38 | 0.38 | 0.25 | | | | | See Figure 9 |
| 10 C | 0.2 | 0.47 | 0.3 | | | | | Conc & 80% RT: homogeneous, clear +4°C: homogeneous, clear also after 17d |
| 11 | - | 2 | - | - | 1 | 2 | | Conc & 80% RT: homogeneous, clear +4°C: clouded, separation |
| 12 | | 1 | | | | 2 | | As 11 |
| 13 | | 2 | | 1 | | 2 | | Cone RT clouded streaks 80% RT homogeneous, clear +4°C: clouded, separation |
| 14 | | | | | 2 | 2 | 1 | As 13 |
| 15 | | | | 1 | | 2 | 1 | Conc RT: solid 80%: RT clear +4°C: clouded, separation |
| 16 | | 2 | | | | 2 | 1 | As 11 |
| 17 | | 2 | | 2 | | 1 | | As 15 |
| 18 | | 1 | | 2 | | 2 | | As 15 |

| | | | | | | | | |
|---|---|---|---|---|---|---|---|---|
| RT: room temperature | | | | | | | | |

**Table 3:**

| | C16/18-18EO-9PO, 80% in water | C16/18-20EO | C14/15-7EO | Remarks | | | | |
|---|---|---|---|---|---|---|---|---|
| 19 | 0.6 | 0.2 | 0.2 | Cone & 80% at RT: homogeneous, clear, at +4°C: homogeneous, clear streaks after 6 d | | | | |
| 20 | 0.2 | 0.6 | 0.2 | Conc at RT: solid, 80%: at RT clear, at +4°C: clouding, separation | | | | |
| 21 | 0.4 | 0.4 | 0.2 | as 20 | | | | |
| 22 | 0.4 | 0.2 | 0.4 | as 20 | | | | |
| 23 | 0.2 | 0.4 | 0.4 | as 20 | | | | |
| 24 | 0.47 | 0.27 | 0.27 | as 20 | | | | |
| 25 | 0.27 | 0.47 | 0.27 | as 20 | | | | |
| 26 | 0.27 | 0.27 | 0.47 | Conc at RT solid, 80%: at RT clear with streaks, +4°C: clouded, separation | | | | |
| 27 | 0.33 | 0.33 | 0.33 | as 26 | | | | |
| 28 | 0.2 | 0.2 | 0.6 | as 26 | | | | |
| | C16/18-18EO-9PO, 80% in water | C16/18-20EO | C14/15-7EO | **Defoamer** | | | | |
| 29 | 2 | | 6 | 2 | Conc at RT clear, 80 & 70% at +4°C: clouded, separation | | | |

| | | | | | | | | |
|---|---|---|---|---|---|---|---|---|
| RT: room temperature | | | | | | | | |

### Final conlusions

All experiments showed the following correlation between alkyl-side chain length and biofilm inhibition and removal: the longer the alkyl-side chain length the better the efficiency of the compound. The ethoxylation degree also plays a major role. Starting at 5 to 6 mol of EO, the efficiency increases significantly. At the same time some negative impact on growth with C-14/15 alkylated ethoxylates can be observed which reduced growth to about 80% of the reference. In contrast to these findings, C-12/14 ethoxylates and C-16/18 ethoxlylates even apparently seem to stimulate growth and therefore did clearly not achieve their activity by a killing effect. It is therefore concluded that a functional biodispersant should have an alkyl-side chain of at least 12 C, preferably of at least 14C, even more preferably of at least 16C, and an ethoxlyation degree of at least 5 mol EO, preferably of at least 7 EO, with an optimal compound being an C16/18 alkyl with 7 EO or higher. Additionally a propoxylation increases the performance of a biodispersant acting as biostabilizer furthermore. From the results of these experiments it is suggested, that biodispersants built on nonioic surfactants of the structure: C-16/18 alcohol + n EO + m PO (n at least 5, m = 0 or higher) are able to most efficiently mimic naturally produced surfactants and are efficient. These compounds are able to act as biostabilizers as well as biowettants and thus prevent and remove biofilms in laboratory as well as biologically induced deposits found in industrial applications.

As for the applications envisaged in this document also stability of a corresponding (aqueous) formulation is of key importance (as otherwise bringing such a formulation into a circulating aqueous system is made difficult if not impossible) an optimum formulation could be found in a system comprising at least two surfactants, specifically a system comprising at least C16/18-18EO-9PO (and minor modifications thereof deviating by preferably not more than +/- 1EO and/or +/- 1PO) and C16/18-20EO (and minor modifications thereof deviating by preferably not more than +/- 3EO) and possibly further additives.

## Claims

1. A method for controlling and preventing the build-up of layer, slime or film formation of microorganisms in various types of in particular circulating aqueous systems wherein the method involves the addition of effective amounts of a composition comprising at least one ethoxylated non-ionic surfactant, wherein the ethoxylated non-ionic surfactant comprises a substantially saturated linear unsubstituted carbohydrate tail portion with at least 16 carbon atoms, which by means of a linker element -O is connected to a polyethoxylate chain comprising at least 5 ethoxylate units, optionally followed by a propylene oxy and/or a butylene oxy chain
**characterized in that**
the composition is added to an operative circulating aqueous system.

2. Method according to claim 1, wherein, the ethoxylated non-ionic surfactant comprises a substantially saturated linear unsubstituted carbohydrate tail portion with a distribution of 16/18 carbon atoms.

3. Method according to claim 2, wherein the polyethoxylate chain comprises on average at least 10, preferably on average at least 15 ethoxylate units.

4. Method according to claim 2, wherein the polyethoxylate chain comprises on average 18 ethoxylate units.

5. Method according to any of the preceding claims 2 - 4, wherein the polyethoxylate chain is followed by a propylene oxy chain comprising on average at least 3 propylene oxy units, preferably on average at least 5 propylene oxy units.

6. Method according to any of the preceding claims 2 - 4, wherein the polyethoxylate chain is followed by a propylene oxy chain comprising on average 9 propylene oxy units.

7. Method according to any of the preceding claims, wherein the composition comprises at least two different such ethoxylated non-ionic surfactants, wherein preferably one of them comprises no propylene oxy chain.

8. Method according to claim 7, wherein the composition comprises a first ethoxylated non-ionic surfactant based on a substantially saturated linear unsubstituted carbohydrate tail portion with a distribution of 16/18 carbon atoms, with a polyethoxylate chain comprising on average 18 ethoxylate units, followed by a propylene oxy chain comprising on average 9 propylene oxy units and
a second ethoxylated non-ionic surfactant based on a substantially saturated linear unsubstituted carbohydrate tail portion with a distribution of 16/18 carbon atoms, with a polyethoxylate chain comprising on average 20 ethoxylate units, not followed by any propylene oxy chain.

9. Method according to any of the preceding claims, wherein the linker element is - O-, and wherein the polyethoxylate chain comprises at least 5 ethoxylate units, and/or wherein the carbohydrate tail portion comprises at least 16 carbon atoms.

10. Method according to any of the preceding claims, wherein the linker element is - O-, and wherein the carbohydrate tail portion comprises between 16 and 24, preferentially between 16 and 22, and even more preferentially between 16 and 20 carbon atoms, and wherein preferably the carbohydrate tail portion comprises between 16 and 18 carbon atoms, wherein preferentially the carbohydrate tail portion is substantially linear and substantially saturated, and/or wherein even more preferably the polyethoxylate chain comprises at least 7 ethoxylate units, and preferentially no more than 20 ethoxylate units.

11. Method according to any of the preceding claims, wherein the propylene oxy and/or a butylene oxy chain comprises between 1 and 10 propylene oxy and/or butylene oxy units.

12. Method according to any of the preceding claims, wherein the at least one ethoxylated non-ionic surfactant is an unsubstituted and substantially linear mixture of C16/18 fatty alcohol with an average ethoxylation of 7, 8, 9, 10, 11, 12, 13, 14, 15, 16, 17, 18, 19 or 20 ethoxylate units and with an average propoxylation of 0-10 propylene oxy units.

13. Method according to any of the preceding claims, wherein the at least one ethoxylated non-ionic surfactant is added to the circulating aqueous system in an amount of 1-100 ppm, more specifically of 2-15ppm, preferentially of 5-10ppm.

14. Method according to any of the preceding claims, wherein the at least one ethoxylated non-ionic surfactant is continuously or batch-wise added to the circulating aqueous system, preferentially to a pulp and paper water processing system, and wherein preferentially the supply with surfactant is controlled as a function of the actual state of layer, slime or film formation of microorganisms in the system.

15. Method according to any of the preceding claims, wherein the at least one of the at least two ethoxylated non-ionic surfactant(s) is/are added to the circulating aqueous system without concomitant addition ofbiocidally active components.

16. Formulation to be added to various types of in particular circulating aqueous systems for controlling the build-up of layer, slime or film formation of microorganisms, in particular for use in a method according to any of the preceding claims, comprising at least one ethoxylated non-ionic surfactant which is a C16/18 fatty alcohol with an average ethoxylation of 7, 8, 9, 10, 11, 12, 13, 14, 15, 16, 17, 18, 19 or 20 ethoxylate units and with an average propoxylation of 0 - 10 propylene oxy units, optionally supplemented by additives like stabilizers, either in solid or liquid form or as a concentrated aqueous solution, and wherein preferentially the formulation is free from biocide.

17. Formulation according to claim 16, preferably as an aqueous solution, comprising a first ethoxylated non-ionic surfactant based on a substantially saturated linear unsubstituted carbohydrate tail portion with a distribution of 16/18 carbon atoms, with a polyethoxylate chain comprising on average 18 ethoxylate units, followed by a propylene oxy chain comprising on average 9 propylene oxy units and
a second ethoxylated non-ionic surfactant based on a substantially saturated linear unsubstituted carbohydrate tail portion with a distribution of 16/18 carbon atoms, with a polyethoxylate chain comprising on average 20 ethoxylate units, not followed by any propylene oxy chain, and possibly further additives, wherein preferably the sum of the surfactants including further additives is 10 - 30 Vol.-%, preferably 15-25 Vol.-% in water.

18. Formulation according to claim 16 or 17, wherein the ratio of the first to the second surfactant is in the range of 1:1 to 4:1, preferably in the range of 3:1.

19. Formulation according to any of claims 16 to 18, wherein at least one further additive is a third ethoxylated non-ionic surfactant based on a substantially saturated linear or branched unsubstituted carbohydrate tail portion, preferably with a distribution of 14/15 carbon atoms, even more preferably with a polyethoxylate chain comprising on average 7 ethoxylate units, not followed by any propylene oxy chain.

## Patentansprüche

1. Verfahren zur Bekämpfung und Verhinderung des Aufbaus von Schicht-, Schleim- oder Filmbildung von Mikroorganismen in verschiedenen Typen von insbesondere zirkulierenden wäßrigen Systemen, bei dem man wirksame Mengen einer Zusammensetzung, die mindestens ein ethoxyliertes nichtionisches Tensid umfaßt, zusetzt, wobei das ethoxylierte nichtionische Tensid einen weitgehend gesättigten linearen unsubstituierten Kohlenhydrat-Schwanzteil mit mindestens 16 Kohlenstoffatomen, der über ein Linker-Element -O- an eine Polyethoxylat-Kette mit mindestens 5 Ethoxylat-Einheiten, gegebenenfalls gefolgt von einer Propylenoxy- und/oder einer Butylenoxy-Kette, gebunden ist, aufweist,
**dadurch gekennzeichnet, daß**
man die Zusammensetzung im Betrieb einem zirkulierenden wäßrigen System zusetzt.

2. Verfahren nach Anspruch 1, bei dem das ethoxylierte nichtionische Tensid einen weitgehend gesättigten linearen unsubstituierten Kohlenhydrat-Schwanzteil mit einer Verteilung von 16/18 Kohlenstoffatomen aufweist.

3. Verfahren nach Anspruch 2, bei dem die Polyethoxylat-Kette durchschnittlich mindestens 10 und vorzugsweise durchschnittlich mindestens 15 Ethoxylat-Einheiten aufweist.

4. Verfahren nach Anspruch 2, bei dem die Polyethoxylat-Kette durchschnittlich 18 Ethoxylat-Einheiten aufweist.

5. Verfahren nach einem der Ansprüche 2 - 4, bei dem auf die Polyethoxylat-Kette eine Propylenoxy-Kette mit durchschnittlich 3 Propylenoxy-Einheiten und vorzugsweise durchschnittlich mindestens 5 Propylenoxy-Einheiten folgt.

6. Verfahren nach einem der Ansprüche 2 - 4, bei dem auf die Polyethoxylat-Kette eine Propylenoxy-Kette mit durchschnittlich 9 Propylenoxy-Einheiten folgt.

7. Verfahren nach einem der vorhergehenden Ansprüche, bei dem die Zusammensetzung mindestens zwei verschiedene derartige ethoxylierte nichtionische Tenside umfaßt, wobei eines davon vorzugsweise keine Propylenoxy-Kette aufweist.

8. Verfahren nach Anspruch 7, bei dem die Zusammensetzung
ein erstes ethoxyliertes nichtionisches Tensid auf Basis eines weitgehend gesättigten linearen unsubstituierten Kohlenhydrat-Schwanzteils mit einer Verteilung von 16/18 Kohlenstoffatomen mit einer Polyethoxylat-Kette mit durchschnittlich 18 Ethoxylat-Einheiten gefolgt von einer Propylenoxy-Kette mit durchschnittlich 9 Propylenoxy-Einheiten und
ein zweites ethoxyliertes nichtionisches Tensid auf Basis eines weitgehend gesättigten linearen unsubstituierten Kohlenhydrat-Schwanzteils mit einer Verteilung von 16/18 Kohlenstoffatomen mit einer Polyethoxylat-Kette mit durchschnittlich 20 Ethoxylat-Einheiten, auf die keine Propylenoxy-Kette folgt, umfaßt.

9. Verfahren nach einem der vorhergehenden Ansprüche, bei dem es sich bei dem Linker-Element um -O-handelt und die Polyethoxylat-Kette mindestens 5 Ethoxylat-Einheiten aufweist und/oder der Kohlenhydrat-Schwanzteil mindestens 16 Kohlenstoffatome aufweist.

10. Verfahren nach einem der vorhergehenden Ansprüche, bei dem es sich bei dem Linker-Element um -O-handelt und der Kohlenhydrat-Schwanzteil zwischen 16 und 24 Kohlenstoffatome, vorzugsweise zwischen 16 und 22 Kohlenstoffatome und noch weiter bevorzugt zwischen 16 und 20 Kohlenstoffatome aufweist und der Kohlenhydrat-Schwanzteil vorzugsweise zwischen 16 und 18 Kohlenstoffatome aufweist, wobei der Kohlenhydrat-Schwanzteil vorzugsweise weitgehend linear und weitgehend gesättigt ist, und/oder noch weiter bevorzugt die Polyethoxylat-Kette mindestens 7 Ethoxylat-Einheiten und vorzugsweise höchstens 20 Ethoxylat-Einheiten aufweist.

11. Verfahren nach einem der vorhergehenden Ansprüche, bei dem die Propylenoxy- und/oder Butylenoxy-Kette zwischen 1 und 10 Propylenoxy- und/oder Butylenoxy-Einheiten aufweist.

12. Verfahren nach einem der vorhergehenden Ansprüche, bei dem es sich bei dem mindestens einen ethoxylierten nichtionischen Tensid um ein unsubstituiertes und weitgehend lineares Gemisch von C16/18-Fettalkohol mit einer durchschnittlichen Ethoxylierung von 7, 8, 9, 10, 11, 12, 13, 14, 15, 16, 17, 18, 19 oder 20 Ethoxylat-Einheiten und einer durchschnittlichen Propoxylierung von 0 - 10 Propylenoxy-Einheiten handelt.

13. Verfahren nach einem der vorhergehenden Ansprüche, bei dem man das mindestens eine ethoxylierte nichtionische Tensid dem zirkulierenden wäßrigen System in einer Menge von 1-100 ppm, spezieller 2-15 ppm und vorzugsweise 5-10 ppm zusetzt.

14. Verfahren nach einem der vorhergehenden Ansprüche, bei dem man das mindestens eine ethoxylierte nichtionische Tensid dem zirkulierenden wäßrigen System, vorzugsweise einem Halbstoff- und Papierwasser-Verarbeitungssystem, kontinuierlich oder diskontinuierlich zusetzt und die Tensidzufuhr vorzugsweise als Funktion des tatsächlichen Zustands der Schicht-, Schleim- oder Filmbildung von Mikroorganismen im System reguliert.

15. Verfahren nach einem der vorhergehenden Ansprüche, bei dem man das mindestens eine der mindestens zwei ethoxylierten nichtionischen Tenside dem zirkulierenden wäßrigen System ohne gleichzeitigen Zusatz von biologisch wirksamen Komponenten zusetzt.

16. Formulierung zum Zusatz zu verschiedenen Typen von insbesondere zirkulierenden wäßrigen Systemen zur Bekämpfung und Verhinderung des Aufbaus von Schicht-, Schleim- oder Filmbildung von Mikroorganismen, insbesondere zur Verwendung bei einem Verfahren nach einem der vorhergehenden Ansprüche, umfassend mindestens ein ethoxyliertes nichtionisches Tensid, bei dem es sich um einen C16/18-Fettalkohol mit einer durchschnittlichen Ethoxylierung von 7, 8, 9, 10, 11, 12, 13, 14, 15, 16, 17, 18, 19 oder 20 Ethoxylat-Einheiten und einer durchschnittlichen Propoxylierung von 0 - 10 Propylenoxy-Einheiten handelt, gegebenenfalls ergänzt durch Additive wie Stabilisatoren, entweder in fester oder in flüssiger Form oder in Form einer konzentrierten wäßrigen Lösung, wobei die Formulierung vorzugsweise biozidfrei ist.

17. Formulierung nach Anspruch 16, vorzugsweise in Form einer wäßrigen Lösung, umfassend ein erstes ethoxyliertes nichtionisches Tensid auf Basis eines weitgehend gesättigten linearen unsubstituierten Kohlenhydrat-Schwanzteils mit einer Verteilung von 16/18 Kohlenstoffatomen mit einer Polyethoxylat-Kette mit durchschnittlich 18 Ethoxylat-Einheiten gefolgt von einer Propylenoxy-Kette mit durchschnittlich 9 Propylenoxy-Einheiten und
ein zweites ethoxyliertes nichtionisches Tensid auf Basis eines weitgehend gesättigten linearen unsubstituierten Kohlenhydrat-Schwanzteils mit einer Verteilung von 16/18 Kohlenstoffatomen mit einer Polyethoxylat-Kette mit durchschnittlich 20 Ethoxylat-Einheiten, auf die keine Propylenoxy-Kette folgt, und gegebenenfalls weitere Additive, wobei die Summe der Tenside einschließlich weiterer Additive vorzugsweise 10-30 Vol.-% und vorzugsweise 15-25 Vol.-% in Wasser beträgt.

18. Formulierung nach Anspruch 16 oder 17, bei der das Verhältnis von erstem Tensid zu zweitem Tensid im Bereich von 1:1 bis 4:1 und vorzugsweise im Bereich von 3:1 liegt.

19. Formulierung nach einem der Ansprüche 16 bis 18, bei der es sich bei mindestens einem weiteren Additiv um ein drittes ethoxyliertes nichtionisches Tensid auf Basis eines weitgehend gesättigten linearen oder verzweigten unsubstituierten Kohlenhydrat-Schwanzteils, vorzugsweise mit einer Verteilung von 14/15 Kohlenstoffatomen, noch weiter bevorzugt mit einer Polyethoxylat-Kette mit durchschnittlich 7 Ethoxylat-Einheiten, auf die keine Propylenoxy-Kette folgt, handelt.

## Revendications

1. Procédé pour contrôler et prévenir l'accumulation de formation de dépôts, de vase ou de film de micro-organismes de différents types en particulier des systèmes aqueux circulants où le procédé met en oeuvre l'ajout de quantités efficaces d'une composition comprenant au moins un tensioactif non ionique éthoxylé, où le tensioactif non ionique éthoxylé comprend une partie de queue glucidique non substituée linéaire sensiblement saturée avec au moins 16 atomes de carbone, qui, au moyen d'un élément lieur -O- est liée à une chaîne polyéthoxylate comprenant au moins 5 motifs éthoxylate, facultativement suivie par une chaîne propylénoxy et/ou butylénoxy
**caractérisé en ce que**
la composition est ajoutée à un système aqueux circulant en marche.

2. Procédé selon la revendication 1, **caractérisé en ce que** le tensioactif non ionique éthoxylé comprend une partie de queue glucidique non substituée linéaire sensiblement saturée avec une distribution de 16/18 atomes de carbone.

3. Procédé selon la revendication 2, où la chaîne polyéthoxylate comprend en moyenne au moins 10, de préférence en moyenne au moins 15 motifs éthoxylate.

4. Procédé selon la revendication 2, **caractérisé en ce que** la chaîne polyéthoxylate comprend en moyenne 18 motifs éthoxylate.

5. Procédé selon l'une quelconque des revendications précédentes 2 à 4, **caractérisé en ce que** la chaîne polyéthoxylate est suivie par une chaîne propylénoxy comprenant en moyenne au moins 3 motifs propylénoxy, de préférence en moyenne au moins 5 motifs propylénoxy.

6. Procédé selon l'une quelconque des revendications précédentes 2 à 4, **caractérisé en ce que** la chaîne polyéthoxylate est suivie par une chaîne propylénoxy comprenant en moyenne 9 motifs propylénoxy.

7. Procédé selon l'une quelconque des revendications précédentes, **caractérisé en ce que** la composition comprend au moins deux tels tensioactifs non ioniques éthoxylés différents, où de préférence l'un d'entre eux ne comprend aucune chaîne propylénoxy.

8. Procédé selon la revendication 7, **caractérisé en ce que** la composition comprend
un premier tensioactif non ionique éthoxylé basé sur une partie de queue glucidique non substituée linéaire sensiblement saturée avec une distribution de 16/18 atomes de carbone, avec une chaîne polyéthoxylate comprenant en moyenne 18 motifs éthoxylate, suivie par une chaîne propylénoxy comprenant en moyenne 9 motifs propylénoxy et
un deuxième tensioactif non ionique éthoxylé basé sur une partie de queue glucidique non substituée linéaire sensiblement saturée avec une distribution de 16/18 atomes de carbone, avec une chaîne polyéthoxylate comprenant en moyenne 20 motifs éthoxylate, non suivie par une chaîne propylénoxy quelconque.

9. Procédé selon l'une quelconque des revendications précédentes, **caractérisé en ce que** l'élément lieur est -O-, et où la chaîne polyéthoxylate comprend au moins 5 motifs éthoxylate, et/ou où la partie de queue glucidique comprend au moins 16 atomes de carbone.

10. Procédé selon l'une quelconque des revendications précédentes, **caractérisé en ce que** l'élément lieur est -O-, et où la partie de queue glucidique comprend entre 16 et 24, de préférence entre 16 et 22, et encore plus préférablement entre 16 et 20 atomes de carbone, et où de préférence la partie de queue glucidique comprend entre 16 et 18 atomes de carbone, où de préférence la partie de queue glucidique est sensiblement linéaire et sensiblement saturée, et/ou où encore plus préférablement la chaîne polyéthoxylate comprend au moins 7 motifs éthoxylate, et de préférence pas plus de 20 motifs éthoxylate.

11. Procédé selon l'une quelconque des revendications précédentes, **caractérisé en ce que** la chaîne propylénoxy et/ou butylénoxy comprend entre 1 et 10 motifs propylénoxy et/ou butylénoxy.

12. Procédé selon l'une quelconque des revendications précédentes, **caractérisé en ce que** l'au moins un tensioactif non ionique éthoxylé est un mélange non substitué et sensiblement linéaire d'alcool gras en C16/18 avec une éthoxylation moyenne de 7, 8, 9, 10, 11, 12, 13, 14, 15, 16, 17, 18, 19 ou 20 motifs éthoxylate et avec une propoxylation moyenne de 0 à 10 motifs propylénoxy.

13. Procédé selon l'une quelconque des revendications précédentes, **caractérisé en ce que** l'au moins un tensioactif non ionique éthoxylé est ajouté au système aqueux circulant en une quantité de 1 à 100 ppm, plus spécifiquement de 2 à 15 ppm, de préférence de 5 à 10 ppm.

14. Procédé selon l'une quelconque des revendications précédentes, **caractérisé en ce que** l'au moins un tensioactif non ionique éthoxylé est ajouté de manière continue ou discontinue au système aqueux circulant, de préférence à un système de traitement de pâte à papier et d'eau de papeterie, et où de préférence l'alimentation en tensioactif est contrôlée en fonction de l'état réel de formation de dépôts, de vase ou de film de micro-organismes dans le système.

15. Procédé selon l'une quelconque des revendications précédentes, **caractérisé en ce que** l'au moins un des au moins deux tensioactifs non ioniques éthoxylés est/sont ajouté(s) au système aqueux circulant sans ajout concomitant de composants à activité biocide.

16. Formulation à ajouter à différents types de systèmes aqueux, en particulier circulants, pour contrôler l'accumulation de formation de dépôts, de vase ou de film de micro-organismes, en particulier pour utilisation dans un procédé selon l'une quelconque des revendications précédentes, comprenant au moins un tensioactif non ionique éthoxylé qui est un alcool gras en C16/18 avec une éthoxylation moyenne de 7, 8, 9, 10, 11, 12, 13, 14, 15, 16, 17, 18, 19 ou 20 motifs éthoxylate et avec une propoxylation moyenne de 0 à 10 motifs propylénoxy, facultativement supplémentée par des additifs tels que des stabilisants, sous forme solide ou liquide ou sous la forme d'une solution aqueuse concentrée, et où de préférence la formulation est exempte de biocide.

17. Formulation selon la revendication 16, de préférence sous la forme d'une solution aqueuse, comprenant un premier tensioactif non ionique éthoxylé basé sur une partie de queue glucidique non substituée linéaire sensiblement saturée avec une distribution de 16/18 atomes de carbone, avec une chaîne polyéthoxylate comprenant en moyenne 18 motifs éthoxylate, suivie par une chaîne propylénoxy comprenant en moyenne 9 motifs propylénoxy et
un deuxième tensioactif non ionique éthoxylé basé sur une partie de queue glucidique non substituée linéaire sensiblement saturée avec une distribution de 16/18 atomes de carbone, avec une chaîne polyéthoxylate comprenant en moyenne 20 motifs éthoxylate, non suivie par une chaîne propylénoxy quelconque, et éventuellement d'autres additifs, où de préférence la somme des tensioactifs comprenant des additifs supplémentaires est de 10 à 30 % en volume, de préférence de 15 à 25 % en volume.

18. Formulation selon la revendication 16 ou 17, **caractérisée en ce que** le rapport du premier au deuxième tensioactif est dans la plage de 1:1 à 4:1, de préférence de l'ordre de 3:1.

19. Formulation selon l'une quelconque des revendications 16 à 18, **caractérisée en ce qu'**au moins un additif supplémentaire est un troisième tensioactif non ionique éthoxylé basé sur une partie de queue glucidique non substituée linéaire ou ramifiée sensiblement saturée, de préférence avec une distribution de 14/15 atomes de carbone, encore plus préférablement avec une chaîne polyéthoxylate comprenant en moyenne 7 motifs éthoxylate, non suivie par une chaîne propylénoxy quelconque.
